# FASCICULE DE BREVET EUROPEEN

(11) **EP 2 652 019 B1**
(45) Date de publication et mention de la délivrance du brevet: **24.04.2019**
(21) Numéro de dépôt: 11794777.0
(22) Date de dépôt: 14.12.2011
(51) Int. Cl.: C08J 7/12, B60S 1/38

(54) **PROCÉDÉ DE TRAITEMENT DE BALAI ESSUIE GLACE**
BEHANDLUNGSVERFAHREN FÜR SCHEIBENWISCHERBLATT
WINDSCREEN WIPER BLADE TREATMENT PROCESS

(30) Priorité: 15.12.2010 FR 1004905; 15.12.2010 FR 1004904
(43) Date de publication de la demande: 23.10.2013
(73) Titulaire: Valeo Systèmes d'Essuyage, 78322 Le Mesnil Saint Denis (FR)
(72) Inventeur: DOUPEUX, Severin, F-63500 Issoire (FR); BRAUN, Alexis, F-63114 Coudes (FR); BRETAGNOL, Frédéric, F-63500 Issoire (FR)
(74) Mandataire: Callu-Danseux, Violaine
(86) Numéro de dépôt international: PCT/EP2011/072814
(87) Numéro de publication internationale: WO 2012/080367

(56) Documents cités:
- EP-A1- 2 067 833
- EP-A2- 0 264 227
- CA-A1- 2 607 647
- FR-A1- 2 942 801
- US-A1- 2002 164 422
- US-B1- 6 287 642

## Description

La présente invention concerne un procédé de traitement d'une lame de balai d'essuie-glace en matériau à base d'élastomère(s) pour véhicule automobile. L'invention concerne également une lame obtenue à l'aide de ce procédé et les utilisations de celle-ci.

Dans le domaine des matériaux techniques à base d'élastomères, la recherche s'oriente souvent vers une amélioration des propriétés mécaniques et/ou de l'aspect de surface des pièces mises en forme à partir de ces matériaux.

Dans le cas de lames d'essuyage pour balai d'essuie-glace de véhicule automobile, ces lames doivent présenter certaines caractéristiques, en particulier en surface, permettant un essuyage efficace du pare-brise sur lequel elles se déplacent.

Ces lames doivent également présenter un confort sonore en utilisation pour l'occupant du véhicule automobile, c'est-à-dire éviter de générer des ondes sonores, donc du bruit.

Les documents US6,287,642, US2002/164422, EP 0 264 227, FR 2 942 801, EP 2 067 833 et CA 2 607 647 décrivent différents procédés de traitement d'une lame de balai essuie-glace en matériau à base d'élastomère(s) ou différents traitements à appliquer sur ladite lame.

La génération d'ondes sonores par une lame de balai essuie-glace peut avoir diverses origines et dépend des conditions de fonctionnement. En effet, le comportement d'une lame de balai essuie-glace varie énormément si celui-ci fonctionne en mode non lubrifié (pare-brise sec) ou lubrifié (le lubrifiant étant alors généralement de l'eau ou du liquide lave-glace), ce dernier mode comportant deux sous-modes de fonctionnement : mouillé (présence continue de lubrifiant) et séchant (correspondant à la phase transitoire où le système n'est plus alimenté en lubrifiant et où le lubrifiant s'évapore progressivement avant d'arriver à un mode non lubrifié).

En mode non lubrifié, il peut se produire un phénomène de reptation à l'origine de bruits désagréables. Ce phénomène apparaît sous l'effet d'un déplacement et est provoqué par la création d'aires de décollements entre l'élastomère de la lame et le verre, ayant pour conséquence un mouvement saccadé du balai essuie-glace appelé « stick-slip ». Toutefois, ce phénomène a lieu quelque soit la vitesse du balai et ne constitue pas la nuisance sonore la plus importante générée par une lame de balai essuie-glace.

D'autre part, lorsqu'un balai essuie glace est utilisé, un mouvement alternatif anime celui-ci sur le pare-brise. Lors du balayage, il se produit une inversion du sens de pivotement de la lame d'essuyage par rapport au talon d'essuyage au cours de laquelle une surface de la lame d'essuyage vient en contact avec la vitre à essuyer. Ces venues en contact lors des retournements du balai essuie glace ont pour conséquence de créer des chocs entre différentes surfaces qui sont également générateurs de bruits nuisibles au confort d'utilisation de véhicule, appelés bruits de retournement.

Cependant, l'origine la plus importante de nuisances sonores est celle des bruits dits « transitoires ». Ces bruits transitoires ne sont pas directement liés au niveau élevé ou faible du coefficient de friction des lames de balais essuie-glace mais dépendent plutôt de la stabilité desdits balais en mode lubrifié mouillé ou séchant et plus particulièrement dans la zone dite de régime mixte. Par « régime mixte », on entend un régime dans lequel la vitesse de fonctionnement du balai est comprise entre 0 et 400 mm/s.

Lors du frottement de caoutchouc sur une surface, il se créé à l'interface caoutchouc/verre un film fin d'eau qui dépend notamment de la surface du caoutchouc, de la pression appliquée et de la vitesse de glissement imposé. L'épaisseur du film d'eau varie de 10 à 900 nm. On constate que plus le film d'eau va être important, plus le coefficient de friction va être bas et inversement. Lors de leur fonctionnement, les balais d'essuie glace rencontrent des vitesses allant de 0 à 2000 mm/s, les vitesses rapides étant observées en milieu de pare-brise alors que les faibles vitesses se rencontrent qu'au niveau des zones de retournement. Par « zone de retournement », on entend la zone de fonctionnement du balai essuie-glace dans laquelle la vitesse dudit balai est comprise entre 0 et 100 mm/s. Pour des vitesses supérieures à 400 mm/s, le régime élasto-hydrodynamique est bien établie et les frictions sont stables sur une large plage de vitesse, n'entraînant pas l'apparition de bruits transitoires. Au contraire, dans les zones de régime mixte et plus particulièrement dans les zones de retournement, les bruits transitoires apparaissent. En effet, les balais d'essuie glace, qu'ils soient produits par extrusion ou par moulage, présentent en surface des rugosités de surface qui vont perturber notamment la continuité du film d'eau dans la plage de vitesses allant de 0 à 400 mm/s et plus particulièrement, de 0 à 100 mm/s, et donc favoriser l'apparition d'instabilités de friction dans les plages de vitesse d'intérêt. Ces instabilités conduisent inexorablement à l'apparition de vibration de la lame de balai d'essuie glace, notamment dans des gammes de fréquences audibles (300 et 800 Hz), appelés bruits transitoires.

La présente invention concerne donc un procédé de traitement des lames de balai essuie-glace permettant de remédier à ces problèmes.

Elle concerne donc un procédé de traitement d'une lame de balai essuie-glace en matériau à base d'élastomère(s), comportant les étapes consistant à :
- traiter la lame par bombardement ionique, le bombardement ionique étant effectué au moyen d'un faisceau d'ions issus de gaz tels que l'hélium ou le diazote, seuls ou en mélange,
- traiter la lame par dépôt d'un revêtement de type peinture.

Le procédé selon l'invention permet de modifier l'état de surface du balai essuie glace notamment en réduisant les rugosités de surfaces d'une lame de balai essuie glace et par conséquent, d'améliorer les performances d'un balai essuie glace en régime mixte et plus particulièrement dans la plage de vitesses allant de 0 à 100 mm/s. Les améliorations concerne notablement une diminution des bruits transitoires et des bruits de retournements et une amélioration de la précision d'arrêt du balai.

Les définitions et préférence détaillées ci-après sont applicables à toute la demande.

Le matériau de lame est à base d'élastomère(s). Par « à base de », on entend un matériau comportant au moins 10% d'élastomère(s), de préférence, au moins 20%, plus préférentiellement, au moins 35%.

Par « élastomère(s) », on entend un polymère présentant des propriétés « hyper-élastiques », obtenues après réticulation du polymère. Ces élastomères comprennent des élastomères naturels ou synthétiques, seuls ou en mélange, en particulier les élastomères choisis parmi le groupe constitué par les caoutchoucs naturels (NR), les polychloroprènes (CR), les éthylène-propylène-diène monomères (EPDM), les caoutchoucs nitriles (NBR, HNBR, XNBR), les polybutadiènes (BR), les caoutchoucs butyles, les épichlorhydrines (ECO/GECO), les copolymères d'éthylène-acrylate (type VAMAC), les polyuréthanes (PU), les élastomères fluorés et les élastomères silicone (VMQ/FMQ). Ces élastomères peuvent être utilisés seul ou en mélange. A titre d'exemple, on cite les mélanges NR/EPDM, NR/CR, EPDM/PP ou d'autres mélanges connus par l'homme de métier.

De préférence, les élastomères sont choisis parmi le groupe constitué par les NR, les EPDM, les CR et les mélanges à base de ces élastomères.

Avantageusement, le matériau comprend au moins un élastomère de base, synthétique ou naturel, ainsi que différentes charges et/ou additifs pour assurer ses performances mécaniques et sa compatibilité avec des environnements climatiques variés.

Les charges utilisées sont généralement du noir de carbone, du graphite, de la silice, du talc ou une craie ainsi que leurs dérivés et/ou mélanges.

Les additifs comprennent entre autres des agents de protection, par exemple des dérivés des paraphénylènediamines qui piègent les UV. Les additifs comprennent également des cires qui migrent en surface pour protéger le matériau. De plus, les additifs peuvent comprendre des plastifiants pour améliorer la tenue à froid et la mise en oeuvre de l'élastomère. Les plastifiants les plus couramment utilisés sont l'huile naphténique, l'huile aromatique, l'huile parrafinique ou l'huile ester. Les additifs comprennent un système de vulcanisation, par exemple comprenant du soufre et/ou différentes molécules améliorant l'efficacité de la réaction ou des dérivés de peroxydes.

Le traitement par bombardement ionique s'effectue à l'aide d'un dispositif comportant un générateur d'ions et un applicateur d'ions tels que par exemple ceux décrits dans FR-A-2 899 242 ou US20060042745.

L'applicateur d'ions comprend habituellement des moyens choisis par exemple parmi des lentilles électrostatiques de mise en forme de faisceau d'ions, un diaphragme, un obturateur un collimateur un analyseur de faisceau d'ions et un contrôleur de faisceau d'ions.

Le générateur d'ions comprend habituellement des moyens choisis par exemple parmi une chambre d'ionisation, une source d'ions à filament ou à résonance cyclotronique électronique ou un système à plasma impulsionnel, un accélérateur d'ions et dans certains cas, un séparateur d'ions.

Le bombardement ionique est de préférence réalisé sous vide. Par exemple, FR-A-2 899 242 propose de loger l'ensemble des moyens de bombardement ionique (générateur d'ions et applicateur d'ions) ainsi que l'objet à traiter dans une chambre à vide. Des moyens de mise sous vide sont raccordés à cette chambre. Ces moyens de mise sous vide doivent permettre d'obtenir un vide relativement poussé dans la chambre, par exemple de l'ordre de 10⁻² mbar à 10⁻⁶ mbar.

Le bombardement ionique est effectué au moyen de faisceaux d'ions mono ou multi-énergie(s) issus de gaz tels que l'hélium, ou le diazote, seuls ou en mélange. En effet, comme cela sera démontré dans l'exemple 2 qui suit, l'effet recherché n'est obtenu qu'à l'aide de ces deux types de faisceau d'ions.

De préférence, le bombardement d'ions s'effectuera à une pression comprise entre 1mbar et 10⁻⁵mbar, de préférence, entre 10⁻² mbar et 5.10⁻⁴ mbar, et transmettant au matériau une énergie de l'ordre de 0,1 à 100 keV, de préférence de 0,3 à 30 keV.

Selon un autre exemple avantageux, le bombardement ionique est généralement réalisé avec une tension d'extraction comprise entre 35 kV et 100 kV, et on implante, dans le matériau, entre 10¹⁴ et 10¹⁶ ions/cm².

Avantageusement, la présente invention permet d'obtenir une réticulation accrue sur au moins une épaisseur superficielle du matériau à base d'élastomère(s). La réticulation est définie comme une densification des liaisons entre les chaînes macromoléculaires constituant le polymère. Par « réticulation accrue », on entend un degré de réticulation supérieur à celui du ou des polymère(s) et/ou élastomère(s) présent(s) dans le reste du matériau et/ou du revêtement.

En général, le degré de réticulation du ou des polymère(s) et/ou élastomère(s) présent(s) dans le reste du matériau et/ou revêtement correspondra au degré de réticulation obtenu dans les conditions usuelles de vulcanisation ou de réticulation chimique du ou des polymère(s) et/ou élastomère(s), c'est-à-dire, sans traitement spécifique additionnel du ou des polymère(s) et/ou élastomère(s).

Pour un polymère donné, le degré de réticulation D peut être mesuré par la solubilité dans un solvant du ou des polymère(s). Le polymère étant soluble dans le solvant, les parties réticulées seront, elles, insolubles.

En considérant uniquement la masse de l'épaisseur superficielle du polymère :
D = poids du polymère traité insoluble dans un solvant / poids total du polymère.

Par exemple, le degré de réticulation du NBR peut être mesuré comme suit :
D = poids du NBR insoluble dans le métacrésol ou l'acide formique / poids total de NBR.

Selon un exemple avantageux, le degré de réticulation de l'élastomère de l'organe dans l'épaisseur superficielle est supérieur de 10% à celui du ou des polymère(s) présent(s) dans le reste du matériau à base d'élastomère, de préférence, de 50%, plus préférentiellement, de 95%.

La réticulation du matériau et/ou du revêtement peut être mise en évidence également par DSC (Differential Scanning Calorimetry). Une comparaison du matériau/revêtement traité et non traité met en évidence que l'accroissement du degré de réticulation du matériau/revêtement a pour effet de faire disparaître la température de transition vitreuse « T_{g} » (changement endothermique de capacité calorifique).

On entend par « épaisseur superficielle », une épaisseur localisée en surface du matériau. Avantageusement, cette épaisseur est inférieure à 5 µm en partant de la surface externe du revêtement, de préférence inférieure à 3 µm, plus préférentiellement inférieure 1 µm. Selon un autre exemple avantageux, l'épaisseur superficielle est égale ou supérieure à 3 µm et inférieure à 5 µm.

La réticulation accrue de cette épaisseur superficielle permet une augmentation de la dureté et de la résistance à l'abrasion en particulier du revêtement et/ou du matériau. Un des effets de cette augmentation de dureté est de réduire le bruit que l'organe est susceptible de produire en frottant sur la surface à essuyer. L'organe selon l'invention permet donc d'améliorer le confort sonore de l'occupant du véhicule.

Un autre effet de cette réticulation accrue est d'augmenter la résistance à l'abrasion de l'organe selon l'invention et par conséquent sa durée de vie. De plus, l'épaisseur superficielle présentant une réticulation accrue forme une barrière qui empêche la migration d'espèces chimiques, notamment les espèces utilisées dans les produits lave-glace ou lave-vitre, vers l'intérieur de l'organe. Or, ces espèces chimiques peuvent dégrader le revêtement et/ou le matériau à base d'élastomère(s).

Le procédé selon l'invention combine une étape de bombardement ionique effectué au moyen d'un faisceau d'ions issus de gaz tels que l'hélium ou le diazote, avec le dépôt d'un revêtement de type peinture. Comme cela sera démontré dans l'exemple 3, la diminution voir la disparition des bruits transitoires n'est obtenue que si cette combinaison est mise en oeuvre.

Le revêtement de type peinture, visé par l'invention est avantageusement déposé à l'aide d'une émulsion comportant de l'eau, un liant et des charges permettant d'abaisser le coefficient de friction de l'organe d'essuyage. L'eau présente dans cette émulsion est ensuite évaporée.

A titre d'exemple, le revêtement utilisé peut être celui défini dans l'exemple du brevet US 5883168.

Le ou les liants comprennent un polymère dont la fonction est de retenir les charges, tel le graphite ou autre particules lubrifiantes, sur l'organe d'essuyage. Il est incorporé sous forme de suspension, de dispersion ou de poudre en fonction du mode d'application du revêtement. Le polymère du liant est choisi parmi les dérivés acryliques, les dérivés styrène acrylique, les acrylonitriles et leurs dérivés, les polyuréthanes de type ester ou éther et leurs dérivés et le polychlorure de vinyle (PVC). Le liant peut également comprendre un élastomère fluoré, des silicones ou siloxanes, des latex élastomériques, les poudres de polyamide, de polyéthylène ou de polypropylène. Le liant peut également comprendre un agent de réticulation du type mélamines, isocyanate ou époxy pour conférer des propriétés de résistance mécanique et chimique accrues au revêtement ainsi que de la cire pour améliorer l'imperméabilité du film formé par les liants.

La ou les charges permettant d'abaisser le coefficient de friction de l'organe d'essuyage sont choisis parmi le groupe constitué par le graphite, le disulfure de molybdène (MoS₂), le talc, le polytétrafluoroéthylène (PTFE), les particules de UHMWPE (« Ultra High Molecular Weight PolyEthylene »), le polyéthylène, le polypropylène, les silicones, les charges nanostructurées comme les fullerènes, les nanotubes de carbones (CNT) ou leurs mélanges. De préférence, la charge est de la poudre de graphite.

L'incorporation de ces charges glissantes dans un liant liquide sera facilitée par des agents de dispersion comme par exemple des polyacrylates. Des agents épaississants évitant leur sédimentation sont également souvent requis. De préférence, le revêtement a une épaisseur comprise entre 1 et 20 µm, plus préférentiellement 2 et 15 µm.

On notera que la surface externe du matériau à base d'élastomère(s) peut être partiellement ou totalement revêtue du revêtement. Avantageusement, la lèvre et à tout le moins la zone (tranche) de la lèvre, destinée à être en contact avec la surface à essuyer, est revêtue du revêtement.

A contrario, la lame est de préférence intégralement être traitée par bombardement ionique. En effet, comme cela est démontré à l'exemple 4 et contrairement à ce qui est communément considéré, ce traitement intégral ne modifie pas le comportement de la lame.

Le procédé de traitement selon l'invention est mis en oeuvre pour diminuer les rugosités de surfaces d'une lame de balai essuie-glace. Les exemples 1 et 2 illustrent plus particulièrement cette utilisation. La diminution de la rugosité de la lame en matériau à base d'élastomère(s) permet de limiter les perturbations au niveau du film d'eau, et par conséquent, les bruits transitoires. Par ailleurs, comme cela est indiqué dans l'exemple 6, le procédé selon l'invention permet de diminuer les bruits de retournements des balais essuie glace. Le procédé de traitement selon l'invention est donc mis en oeuvre pour diminuer les nuisances sonores générées par une lame de balai d'essuie-glace. Ces diminutions des nuisances sonores sont particulièrement perceptibles lorsque le balai fonctionne en mode lubrifié, en régime mixte, et plus particulièrement dans les zones de retournements.

La diminution des rugosités a également un impact sur la précision du point d'arrêt du balai essuie glace, au niveau des zones de retournements, comme cela est indiqué dans l'exemple 5.

L'invention a également pour objet une lame de balai d'essuie-glace telle qu'obtenue par le procédé selon l'invention.

Par exemple, une lame est usuellement composée de trois éléments :
- une lèvre assurant le contact avec le pare-brise et assurant le joint d'étanchéité permettant l'essuyage de l'eau,
- un talon de forme généralement rectangulaire permettant d'insérer la lame dans le balai et,
- une charnière (optionnelle) formée par une fine bande de caoutchouc située entre la lèvre et le talon et assurant le bon positionnement de la lèvre sur le pare-brise, notamment lors du changement de direction du balai aux points de retournement.

On notera que le balai essuie-glace peut être, soit un balai classique, soit un balai plat.

Par « balai classique », on entend un balai dont la répartition de pression imprimée par le bras supportant le balai est assurée par des palonniers répartis le long du balai.

Alors que pour un « balai plat », la répartition de pression imprimée par le bras supportant le balai est assurée par une vertèbre métallique ayant une courbure et une pression calculée. Ainsi, on peut supprimer les palonniers du bras ce qui permet une réduction de la hauteur du balai.

L'invention concerne également l'utilisation d'une lame de balai d'essuie-glace selon l'invention pour améliorer le comportement d'un balai essuie-glace en régime mixte, et plus particulièrement, lorsque le balai a une vitesse allant de 0 à 100 mm/s. Par amélioration, on vise en particulier une meilleure précision du point d'arrêt du balai essuie-glace lors de son retournement. En effet, un balai est animé d'un mouvement alternatif nécessitant un arrêt et retournement du balai. Lors de ce retournement, le moteur est mis en court circuit et le balai s'arrête. La lame selon l'invention permet d'obtenir une distance d'arrêt du balai lors de la mise en court-circuit du moteur quasi constante indépendamment du mode de fonctionnement (lubrifié ou non lubrifié). Par amélioration, on vise également une diminution des bruits transitoires et du bruit de retournement du balai essuie-glace.

Le contrôle du point d'arrêt permet à la fois d'éviter une dégradation prématurée du balai essuie glace (et plus particulièrement de la lame de balai) et de maintenir une bonne visibilité du pare-brise. En effet, lorsque cette distance d'arrêt est trop importante, il arrive que le balai aille taper contre le bandeau du pare-brise. En revanche, lorsque cette distance est trop courte, le pare-brise n'est pas correctement essuyé.

D'autres caractéristiques et avantages de l'invention sont décrits dans les exemples qui suivent, donnés uniquement à titre d'exemple non limitatifs et faits en se référant aux dessins dans lesquels :
- la figure 1 est une vue schématique en perspective d'un balai d'essuie-glace classique (1a) ou plat (1b), et
- la figure 2 est une vue schématique en perspective d'une lame d'essuyage selon un mode de réalisation de l'invention.

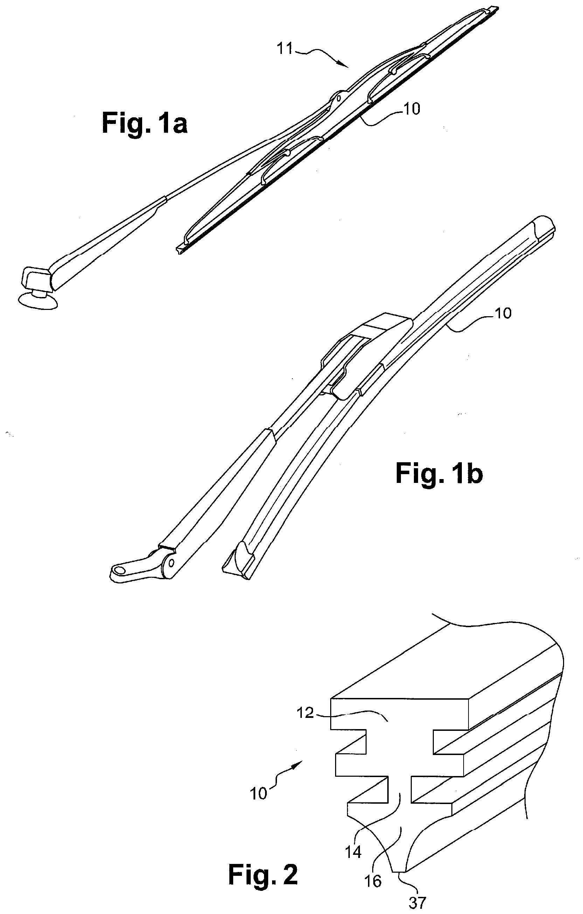

La figure 1 représente une vue schématique en perspective d'un balai d'essuie-glace 11 classique (1a) ou plat (1b) comprenant une lame d'essuyage 10 selon l'invention.

La figure 2 est une représentation de la lame d'essuyage 10 qui comprend un talon 12 qui permet d'insérer la lame dans un balai essuie-glace 11. Cette lame 10 comprend également une lèvre 16 qui assure le contact avec la surface à essuyer et une charnière 14 formée par une fine bande de caoutchouc située entre la lèvre 16 et le talon 12. Cette charnière 14 assure le bon positionnement de la lèvre 16 sur la surface à essuyer, notamment lors du changement de direction du balai 11 aux points de retournement. La surface à essuyer est dans le cas présent un pare-brise de véhicule automobile.

### Exemple 1 : Traitement d'un balai d'essuie glace à base de caoutchouc naturel - Effet sur la rugosité

Les pièces sont mise en oeuvre par extrusion ou par tout autre moyen de transformation. Cette pièce est insérée dans une chambre, munie d'un appareillage de bombardement ionique, dans laquelle on réalise un vide compris entre 1 et 10⁻⁴ mbar, de préférence 10⁻³ mbar.

Les paramètres de bombardement sont les suivants :
Gaz : Hélium
Tension d'extraction 45 kV,
Temps de traitement par cm² de profilé: 2 secondes
Pression de travail (P) 5.10⁻⁴ mbar<P<1.10⁻² mbar
Substrat : profilé de balai d'essuie glace à base de caoutchouc naturel (NR)

Après traitement, les mesures effectuées sur les pièces sont les suivantes :
Ra : Moyenne arithmétique des écarts du profil de rugosité filtré de la ligne moyenne au sein de la course de mesure.
Sa : équivalent du Ra mais en 3 D.
Sdr : rapports des surfaces développées.

Les mesures ont été effectuées au moyen d'un microscope Talysurf CCI Lite avec l'objectif x50 et via le logiciel Talymap Platinum. Le filtre utilisé est de 80 µm.

| **matériau** | **gaz** | **Sa (µm)** | **Sdr (µm)** |
|---|---|---|---|
| NR | - | 0,753 | 37,76 |
| NR | He | 0,329 | 12,69 |

Conclusion : Le traitement de surface par bombardement ionique permet donc de réduire de manière significative la rugosité de surface. En effet, la pièce traitée présente des valeurs de Sa et de Sdr nettement plus faibles que la pièce non traité.

### Exemple 2 : Mesure de rugosité - choix des gaz et autres irradiations

Concernant l'implantation ionique, les faisceaux d'ions hélium (He) et diazote (N₂) permettent de réduire les paramètres de rugosités alors que l'utilisation de l'argon (Ar) conduit à une augmentation de rugosité de surface.

L'utilisation de l'infra-rouge (IR) ou de l'ultra-violet (UV) ne conduit pas à des modifications significatives de rugosités de surface.

| **matériau** | **gaz** | **Sa (µm)** | **Sdr (µm)** |
|---|---|---|---|
| NR | - | 0,753 | 37,76 |
| NR | He | 0,329 | 12,69 |
| NR | N₂ | 0.343 | 12.53 |
| NR | Ar | 0.999 | 45.12 |
| NR | UV | 0,748 | 38,01 |
| NR | IR | 0,754 | 37,56 |

| | | | |
|---|---|---|---|
| NR : caoutchouc naturel - Sa : rugosité de surface - Sdr : rapport des surface développées | | | |

### Exemple 3 : Traitement d'un balai d'essuie glace à base de caoutchouc naturel (NR) - Effet sur les performances acoustiques

Les pièces sont mise en oeuvre par extrusion ou par tout autre moyen de transformation (par exemple, moulage). Les pièces sont insérées dans une chambre, munie d'un appareillage de bombardement ionique, dans laquelle on réalise un vide compris entre 1 et 10⁻⁴ mbar, de préférence 10⁻³.

Les paramètres de bombardement sont les suivants :
Gaz : Hélium et Diazote (N₂)
Tension d'extraction : 45 kV pour l'hélium et 50 kV pour le diazote,
Temps de traitement par cm² de profilé: 2 secondes
Pression de travail (P) 5.10⁻⁴ mbar<P<1.10⁻² mbar
Substrat : profilé de balai d'essuie glace à base de caoutchouc naturel (NR)

Après application du traitement par bombardement ionique un revêtement contenant notamment un liant, de l'eau et des particules de graphite tel que décrit dans US 5883168 est appliqué à la surface de la pièce.

Le profilé ainsi traité est ensuite refendu à l'aide d'un moyen adapté connu de l'homme de métier afin de produire deux lames de balai d'essuie glace à partir du même profilé.

Les échantillons sont ensuite analysés selon la méthode d'analyse décrite en détail dans l'article « Wiper rubber blade squeal noise test: methodology for its characterisation and inflential factors study » de A. Sanon et issu du proceeding relatif au congrès «AUTOMOBILE AND RAILROAD COMFORT, Acoustics, Vibrations & Thermal issues », octobre 2010.

| **matériau** | **gaz** | **revêtement** | **% occurrence de bruit** |
|---|---|---|---|
| NR | - | - | 80 |
| NR | - | oui | 60 |
| NR | He | - | 40 |
| NR | N₂ | - | 20 |
| NR | He | oui | 4 |
| NR | N₂ | oui | 0 |

Conclusion : Ces résultats démontrent que le (i) le bombardement ionique qu'il soit fait avec du diazote ou de l'hélium permet d'améliorer les performances de bruits transitoires de balais d'essuie glace, (ii) que pour être pleinement efficace le bombardement ionique doit être couplé avec un revêtement de type peinture. Les résultats avec l'hélium révèlent une synergie des deux étapes du procédé selon l'invention et la combinaison des deux étapes avec l'utilisation du diazote se révèle la plus efficace.

### Exemple 4 : Mesure d'angle de raclage

La mesure d'angle de contact représente l'angle que fait la lèvre du balai d'essuie glace avec la vitre.

Les résultats suivants montre que le procédé selon l'invention qu'il soit appliqué de manière localisé sur la lèvre ou sur l'ensemble de la pièce conduit à des angles de raclage similaire, indiquant que la rigidité du profil n'est pas affectée. Au contraire dans le cas d'une irradiation par faisceau d'électrons (electron beam), une rigidification très nette est observée lorsque le traitement est appliqué sur l'ensemble de la pièce.

| **Traitement** | **Angle de raclage** | |
|---|---|---|
| | **Gauche** | **Droit** |
| He sur toute la surface+ revêtement | 46 | 45 |
| He localisé lèvre + revêtement | 45 | 46 |
| FE sur toute la surface + revêtement | 60 | 60 |
| FE localisé + revêtement | 48 | 49 |

| | | |
|---|---|---|
| He : faisceau d'ions hélium. FE : faisceau d'électrons (« electron beam ») | | |

Conclusion : le procédé selon l'invention peut être appliqué sur toute la surface sans modifications significatives de la rigidité du matériau

### Exemple 5 : Amélioration de la précision moteur

Pendant le retournement du bras balai, le moteur est mis en court-circuit pour arrêter le bras balai. Le couple bras balai est l'ensemble constitué du balai essuie glace et du bras qui relie le balai à la motorisation du système. La figure 1 montre cet ensemble bras et balai. Ces distances sont mesurées et indiquées dans le tableau ci-après Le procédé selon l'invention permet de mieux contrôler la distance d'arrêt du bras balai.

| | Mouillé→Sec Distance (mm) | Mouillé→ Mouillé Distance (mm) | Sec/séchant → Mouillé Distance (mm) |
|---|---|---|---|
| NR + revêtement | -30 | 0 | +10 |
| NR + N₂ | -22 | 0 | +8 |
| NR + N₂+ revêtement | -15 | 0 | +4 |

Avec le procédé selon l'invention, on améliore la précision d'arrêt par un facteur 2.

### Exemple 6 : Bruit de retournement

Lorsqu'un balai d'essuie glace est utilisé, un mouvement alternatif anime celui-ci sur le pare-brise. Lors du balayage, il se produit une inversion du sens de pivotement de la lame d'essuyage par rapport au talon d'essuyage au cours de laquelle une surface de la lame d'essuyage vient en contact avec la vitre à essuyer.

Ces venues en contact ont pour conséquence de créer des chocs entre différentes surfaces qui sont générateurs de bruits nuisibles au confort d'utilisation de véhicule. Ces bruits de fonctionnement lors des phases d'inversion de la lame d'essuie glace sont particulièrement nuisibles en ce qu'ils revêtent pour les passagers, un caractère répétitif et régulier.

Une friction plus élevée en régime mouillé au niveau des zones de retournement permet de diminuer l'énergie globale du balai et en conséquence diminuer l'intensité du choc entre le talon avec la surface du balai.

| Traitement | Grande vitesse en mode mouillé | Petite vitesse en mode mouillé | Grande vitesse en mode non lubrifié | Petite vitesse en mode non lubrifié |
|---|---|---|---|---|
| NR + revêtement | 72.0 | 71.0 | 72.0 | 68.6 |
| NR + N₂ + revêtement | 70 | 69.0 | 72.0 | 68.8 |

| | | | | |
|---|---|---|---|---|
| Les résultats sont exprimes en phones. | | | | |

Un gain de 2 phones en conditions mouillées est mesuré avec le traitement par bombardement ionique.

## Revendications

1. Procédé de traitement d'une lame de balai d'essuie-glace en matériau à base d'élastomère(s), comportant les étapes consistant à :
- traiter la lame par bombardement ionique, le bombardement ionique étant effectué au moyen d'un faisceau d'ions issus de gaz choisis parmi l'hélium ou le diazote, seuls ou en mélange,
- traiter la lame par dépôt d'un revêtement de type peinture déposé à l'aide d'une émulsion comportant de l'eau, au moins un liant et des charges choisies parmi le groupe constitué par le graphite, le disulfure de molybdène, le talc, le polytétrafluoroéthylène, les particules de polyéthylène de poids moléculaire ultra-élevé, le polyéthylène, le polypropylène, les silicones, les charges nanostructurées, les nanotubes de carbones ou leurs mélanges, le ou les liants comprenant un polymère choisi par les dérivés acryliques, les dérivés styrène acrylique, les acrylonitriles et leurs dérivés, les polyuréthanes de type ester ou éther et leurs dérivés et le polychlorure de vinyle et dont la fonction est de retenir les charges, le ou les liants comprenant également un agent de réticulation du type mélamines, isocyanate ou époxy, l'eau présente dans cette émulsion étant ensuite évaporée.

2. Procédé selon la revendication 1, dans lequel le bombardement ionique est réalisé sous vide.

3. Procédé selon la revendication 1 ou 2, dans lequel l'énergie transmise au matériau est comprise entre 0.1 et 100keV.

4. Procédé selon l'une quelconque des revendications 1 à 3, dans lequel le revêtement de type peinture est déposé à l'aide d'une émulsion comportant de l'eau, un liant et de la poudre de graphite.

5. Procédé selon l'une quelconque des revendications précédentes, dans lequel le liant comprend également un élastomère fluoré, des silicones ou siloxanes, des latex élastomériques, les poudres de polyamide, de polyéthylène ou de polypropylène.

6. Lame de balai d'essuie-glace obtenue par le procédé selon l'une quelconque des revendications précédentes.

## Patentansprüche

1. Behandlungsverfahren für einen Wischergummi eines Scheibenwischerblatts aus einem Material auf Elastomerbasis, das folgende Schritte umfasst:
- Behandeln des Wischergummis mittels Ionenbeschuss, wobei der Ionenbeschuss mit einem Strahl aus Ionen von Gasen ausgewählt aus Helium oder Distickstoff, allein oder gemischt, vorgenommen wird,
- Behandeln des Wischergummis durch Aufbringen einer Anstrichbeschichtung, die mithilfe einer Emulsion aufgebracht wird, die Wasser, mindestens ein Bindemittel und Füllstoffe aufweist, die ausgewählt sind aus der Gruppe bestehend aus Graphit, Molybdändisulfid, Talk, Polytetrafluorethylen, Teilchen aus ultrahochmolekularem Polyethylen, Polyethylen, Polypropylen, Silikonen, nanostrukturierten Füllstoffen, Kohlenstoffnanoröhrchen oder ihren Mischungen, wobei das oder die Bindemittel ein Polymer umfasst bzw. umfassen ausgewählt aus Acrylderivaten, Styrol-Acryl-Derivaten, Acrylonitrilen und ihren Derivaten, Ester- oder Ether-Polyurethanen und ihren Derivaten und Polyvinylchlorid und dessen bzw. deren Aufgabe das Zusammenhalten der Füllstoffe ist, wobei das oder die Bindemittel zudem ein Vernetzungsmittel vom Typ Melamine, Isocyanat oder Epoxidharz umfasst bzw. umfassen, wobei das in dieser Emulsion vorhandene Wasser anschießend verdampft wird.

2. Verfahren nach Anspruch 1, wobei der Ionenbeschuss im Vakuum erfolgt.

3. Verfahren nach Anspruch 1 oder 2, wobei die an das Material übertragene Energie zwischen 0,1 und 100 keV liegt.

4. Verfahren nach einem der Ansprüche 1 bis 3, wobei die Anstrichbeschichtung mithilfe einer Emulsion aufgebracht wird, die Wasser, ein Bindemittel und Graphitpulver aufweist.

5. Verfahren nach einem der vorhergehenden Ansprüche, wobei das Bindemittel auch ein Fluorelastomer, Silikone oder Siloxane, Elastomerlatizes, Polyamid-, Polyethylen- oder Polypropylenpulver umfasst.

6. Wischergummi eines Scheibenwischerblatts, der mit dem Verfahren nach einem der vorhergehenden Ansprüche hergestellt ist.

## Claims

1. A process for treating a windshield wiper blade made of a material based on elastomer(s) comprising the steps consisting in:
- treating the blade by ion bombardment, the ion bombardment being carried out by means of a beam of ions resulting from gases such as helium or nitrogen, alone or as a mixture,
- treating the blade by deposition of a paint-type coating deposited using an emulsion comprising water, at least a binder and fillers chosen from the group consisting of graphite, molybdenum disulfide, talc, polytetrafluoroethylene, particles of ultrahigh molecular weight polyethylene, polyethylene, polypropylene, silicones, nanostructured fillers, carbon nanotubes or mixtures thereof, the binder comprising a polymer chosen from acrylic derivatives, acrylic styrene derivatives, acrylonitriles and derivatives thereof, polyurethanes of ester or ether type and derivatives thereof and polyvinyl chloride and the role of which is to retain the fillers, the binder also comprising a crosslinking agent of melamine, isocyanate or epoxy type, the water presents in this emulsion is then evaporated.

2. The process as claimed in claim 1, wherein the ion bombardment is carried out under vacuum.

3. The process as claimed in claim 1 or 2, wherein the energy transmitted to the material is between 0.1 and 100 keV.

4. The process as claimed in any one of claims 1 to 3, wherein the paint-type coating is deposited using an emulsion comprising water, a binder and graphite powder.

5. The process according to one of the preceding claims, in which the binder comprises also a fluoroelastomer, silicones or siloxanes, elastomeric latices, and powders of polyamide, of polyethylene or of polypropylene.

6. A windshield wiper blade obtained by the process as claimed in any one of the preceding claims.
